# EUROPÄISCHE PATENTANMELDUNG

(11) **EP 1 544 272 A1**
(43) Veröffentlichungstag der Anmeldung: **22.06.2005**
(21) Anmeldenummer: 04106651.5
(22) Anmeldetag: 16.12.2004
(51) Int. Cl.: C09J 7/00, C09J 133/04

(54) **Haftklebemasse**

(30) Priorität: 18.12.2003 DE 10359971
(71) Anmelder: tesa AG, 20253 Hamburg (DE)
(72) Erfinder: Husemann, Marc Dr., 22605, Hamburg (DE); Zöllner, Stephan Dr., 22043, Hamburg (DE); Ibrahimi, Roya, 22761, Hamburg (DE)

(57) **Zusammenfassung**

Die Erfindung betrifft eine Haftklebemasse. Dabei ist vorgesehen, daß sie, bezogen auf die Haftklebemasse,
(a) 85 bis 98 Gew.-% eines Polymers aus einer Comonomerzusammensetzung, umfassend, bezogen auf die Comonomerzusammensetzung,
   (a1) 70 bis 99 Gew.-% Acrylsäure- und/oder Methacrylsäure-Derivate der Formel CH₂=CH(R₁)(COOR₂), wobei R₁ H oder CH₃ darstellt und R₂ eine Alkylkette mit 2 bis 20 Kohlenstoffatomen darstellt; und
   (a2) 1 bis 30 Gew.-% funktionalisierte Vinylverbindungen; sowie
(b) 2 bis 15 Gew.-% PMMA-Kugeln mit einer Größe von 2 bis 10 µm umfaßt.

## Beschreibung

Die Erfindung betrifft eine Haftklebemasse, Verfahren zu deren Herstellung sowie eine Verwendung einer derartigen Haftklebemasse für ein Klebeband.

Für industrielle und für Konsumer-Anwendungen besteht ein großer Bedarf an repositionierbaren oder leicht-entfernbaren Haftklebebändern oder im allgemeinen an Haftklebebändern, die nach der Applikation auf das Substrat nicht aufziehen. Einige typische Anwendungsbeispiele sind z. B. doppelseitige Verklebungen. Im Haushaltsbereich sind zum z. B. Posterverklebungen mit der Wand denkbar. Für diese Anwendung werden nur relativ schwachklebende Haftklebemassen benötigt, die auch über einen längeren Zeitraum keine höheren Klebkräfte mit dem Substrat aufbauen sollten, um z. B. Schädigungen der Wand (Tapete) zu vermeiden. Im industriellen Bereich werden z. B. in der Druckindustrie doppelseitige Klebebänder zur Verklebung von flexiblen Druckplatten auf Stahlrollen (Flexo-Druck) eingesetzt. Hier will der Drucker im Notfall bei der ersten Positionierung der Druckplatte gegebenenfalls nochmals repositionieren oder nach abgeschlossener Anwendung die Druckplatte samt Fix wieder leicht entfernen können, da sonst ein aufwendiger Prozeß anfällt, um die Stahlrolle wieder aufwendig mit Lösemitteln von den Klebemasseresten zu reinigen.

Auch Schutzfolienverklebungen sind ein weiteres klassisches Beispiel für Haftklebebänder mit geringer und konstanter Klebkraft über einen längeren Zeitraum. Die Schutzfolie sollte auch nach der Applikation auf dem Substrat noch leicht und ohne Schädigung zu entfernen sein. Auch hier sind Haftklebemassenreste unerwünscht und zu vermeiden.

Durch ökonomische und ökologische Überlegungen besteht im allgemeinen der Trend zur Herstellung von Haftklebebändern aller Art im Hotmelt-Verfahren, da in diesem Prozeß Lösemittel weitgehend ausgeschlossen werden. Weiterhin wird die Produktionszeit durch schnellere Beschichtungsgeschwindigkeiten verkürzt.

Um den Bedarf an Witterungs- und Temperatur- sowie Oxidationsstabilen Haftklebemassen zu decken, werden sehr häufig Acrylathaftklebemassen eingesetzt.

Acrylathotmelt-Anwendungen sind bereits seit langem bekannt und vor langer Zeit beschrieben worden [Dutch Pat. 6 606 711 und 7 009 629]. Um nun die Klebkräfte auf polaren Substraten, wie Stahl herabzusetzen, werden nach dem Stand der Technik sehr häufig unpolare Harze hinzugegeben. Ein unerwünschter Nebeneffekt dieser Methode ist häufig die Migration der Harze innerhalb der Haftklebemasse.

Neuere Methoden verwenden Mikropartikel in den Haftklebemassen. Hier werden in der Hitze ausdehnbare Mikropartikel [US 5,441,810] eingesetzt, die sich nach Temperatureinwirkung ausdehnen und eine leichtere Entfernung vom Substrat erlauben. Nachteilig ist natürlich die vor dem Entfernen der Haftklebemasse benötigte Temperaturerhöhung. Daneben finden auch viele Partikel Einsatz als klebrige Zusatzkomponenten [US 3,857,731]. Diese werden z. B. nach Bohnel [US 4,166,152] im Emulsionspolymerisationsverfahren hergestellt. Auch klebrige Mikropartikel sind für Haftklebeanwendungen bereits eingesetzt worden [US 4,810,763]. Für repositionierbare Haftklebeflächen wurden Mikrokugeln aus PMMA und Polyacrylsäure eingesetzt [US 4,735,837]. Um eine optimale Repositionierbarkeit zu erhalten, wurden die Anteile der Mikrokugeln zur Haftklebemasse variiert.

In Verbindung mit einem Hotmelt-Verfahren sind klebrige Partikel zu Hotmeltklebemassen zugesetzt worden [US 4,049,483]. Neben Polymer-Partikeln lassen sich aber auch Glaskugeln in Klebemassen einsetzen [US 4,223,067]. Letztendlich sind auch zahlreiche Spraycoatverfahren beschrieben worden [US 4,994,322 und 4,554,324].

Aufgabe der Erfindung ist es, die Nachteile nach dem Stand der Technik zu beseitigen. Es soll insbesondere eine Haftklebemasse angegeben werden, die kein oder ein im Vergleich zum Stand der Technik deutlich reduziertes Aufziehverhalten aufweist. Ferner sollen Verfahren zur Herstellung einer solchen Haftklebemasse sowie eine Verwendung einer derartigen Haftklebemasse angegeben werden.

Diese Aufgabe wird durch die Merkmale der Ansprüche 1, 4, 5 und 8 gelöst. Zweckmäßige Ausgestaltungen der Erfindungen ergeben sich aus den Merkmalen der Ansprüche 2, 3, 6, 7 und 9.

Nach Maßgabe der Erfindung ist eine Haftklebemasse vorgesehen, die, bezogen auf die Haftklebemasse,
(a) 85 bis 98 Gew.-% eines Polymers aus einer Comonomerzusammensetzung, umfassend, bezogen auf die Comonomerzusammensetzung,
   (a1) 70 bis 99 Gew.-% Acrylsäure- und/oder Methacrylsäure-Derivate der Formel CH₂=CH(R₁)(COOR₂), wobei R₁ H oder CH₃ darstellt und R₂ eine Alkylkette mit 2 bis 20 Kohlenstoffatomen darstellt; und
   (a2) 1 bis 30 Gew.-% funktionalisierte Vinylverbindungen; sowie
(b) 2 bis 15 Gew.-% PMMA-Kugeln mit einer Größe von 2 bis 10 µm umfaßt.

Unter PMMA wird hierin Polymethylmethacrylat verstanden.

Die PMMA-Kugeln sind zweckmäßigerweise nicht klebrige Kugeln.

Die erfindungsgemäße Haftklebemasse besitzt kein oder ein deutlich reduziertes Aufziehverhalten. Die erfindungsgemäßen Haftklebemassen sind somit nicht oder nur gering aufziehende Klebemassen.

Im Vergleich zum bloßen Polymer (a) verändert sich die Fließviskosität der erfindungsgemäßen Haftklebemasse. durch den Zusatz der PMMA-Kugeln in nur sehr geringen Grenzen (< 5 %), ist die Klebkraft auf unterschiedlichen Substraten reduziert, das Aufziehverhalten auf unterschiedlichen Substraten vermindert oder eliminiert, ist die Scherfestigkeit erhöht und wird die Schneidbarkeit der Haftklebemasse auf einem Träger verbessert.

Durch den Mengenanteil der PMMA-Kugeln kann das Niveau der Klebkraft eingestellt werden kann.

Die nicht-klebrigen PMMA-Kugeln können in einem Hotmelt-Prozeß mit Acrylathaftklebemassen verarbeitet und beschichtet werden. Die so hergestellten Haftklebebänder besitzen kein oder ein deutlich reduziertes Aufziehverhalten.

Die funktionalisierte Vinylverbindung wird vorzugsweise aus der Gruppe ausgewählt, die Maleinsäureanhydrid, Styrol, Styrol-Derivate, Vinylacetat, Acrylamide und mit Doppelbindungen funktionalisierte Photoinitiatoren umfaßt.

Die erfindungsgemäße Haftklebemasse kann zum Erreichen der optimalen klebtechnischen Eigenschaften weiter modifiziert werden. Zur Kohäsionssteigerung können vor einer Vernetzung Vernetzer oder Fotoinitiatoren hinzugeben werden, wobei sich als Vernetzer alle bi- oder multifunktionellen Verbindungen einsetzen lassen, deren funktionelle Gruppen mit den Polyacrylaten eine Verknüpfungsreaktion eingehen können, insbesondere Polymerisations-, Polykondensations- oder Polyadditionsreaktionen.

Für Acrylathotmelts werden multifunktionelle Acrylate bevorzugt, die als Vernetzer während der UV-Härtung oder der Härtung durch ionisierende Strahlung fungieren. Als Photoinitiatoren können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate eingesetzt werden.

Weiterhin werden die Polymere zur Herstellung von Haftklebemassen optional mit weiteren Harzen abgemischt. Als Harze sind beispielsweise Terpen-, Terpenphenolharze, C₅- und C₉-Kohlenwasserstoffharze, Pinen-, Inden- und Kolophoniumharze in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Die Harze werden allgemein bevorzugt in die Polyacrylatschmelze hinzudosiert, wobei sehr bevorzugt zum Eintrag ein Doppelschneckenextruder verwendet wird.

Weiterhin können verschiedene Füllstoffe (beispielsweise Ruß, TiO₂, Voll- oder Hohlkugeln aus Glas oder anderen Materialien, Keimbildner), Blähmittel, Compoundierungsmittel und/oder Alterungsschutzmittel zugesetzt werden.

Die erfindungsgemäße Haftklebemasse kann aus der Schmelze heraus weiterverarbeitet und so beispielsweise auf einen Träger aufgetragen werden. Dies ist insbesondere für die Herstellung von Klebebändern vorteilhaft.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Die erfindungsgemäße Haftklebemasse kann thermisch, durch UV-Strahlung oder durch ionisierende Strahlung, wie z. B. Elektronenstrahlung, vernetzt werden. Dies ist insbesondere für die Herstellung von Klebebändern vorteilhaft.

Die Vernetzung durch UV-Bestrahlung erfolgt im Bereich von 200 bis 400 nm mit handelsüblichen Quecksilber-Hochdruck- oder -Mitteldrucklampen mit einer Leistung von z. B. 80 bis 200 W/cm. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Nach Maßgabe der Erfindung ist demnach ein Verfahren zur Herstellung einer erfindungsgemäßen Haftklebemasse vorgesehen, daß folgende Schritte umfaßt:
(a) Herstellen eines Gemisches, umfassend die Komponenten der Comonomerzusammensetzung und die PMMA-Kugeln; und
(b) Polymerisieren der Comonomerzusammensetzung.

Alternativ kann die erfindungsgemäße Haftklebemasse jedoch auch durch ein Verfahren hergestellt werden, das folgende Schritte umfaßt:
(a) Herstellen eines Gemisches, umfassend die Komponenten der Comonomerzusammensetzung;
(b) Polymerisieren der Comonomerzusammensetzung unter Erhalt des Polymers; und
(c) Zugabe der PMMA-Kugeln zu dem Polymer und Vermischen des Polymers mit den PMMA-Kugeln.

Die erfindungsgemäße Haftklebemasse kann für ein Klebeband verwendet werden,
wobei die Acrylathaftklebemasse als ein- oder doppelseitiger Film auf einem Träger vorliegt.

Die Erfindung wird nachstehend anhand von Beispielen mit Bezug auf die beigefügten Figuren ausführlicher erläutert. Dabei zeigen
- Fig. 1: ein Diagramm, daß die Fließviskositäten einer ersten Ausführungsform einer erfindungsgemäßen Haftklebemasse sowie eines Polymers ohne PMMA-Kugeln zeigt; und
- Fig. 2: ein Diagramm, daß die Fließviskositäten einer zweiten Ausführungsform einer erfindungsgemäßen Haftklebemasse sowie eines Polymers ohne PMMA-Kugeln zeigt.

### Testmethoden

Folgende Testmethoden wurden angewendet um die klebtechnischen Eigenschaften der hergestellten Haftklebemassen zu evaluieren.

### Scherfestigkeit

Ein 13 mm breiter Streifen eines Klebebandes, das mit einer Haftklebemasse beschichtet worden war, wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem Gewicht von 2 kg das Klebeband viermal auf den Stahlträger gedrückt. Bei Raumtemperatur wurde ein Gewicht von 1 kg an dem Klebeband befestigt und die Zeit bis zum Herunterfallen des Gewichtes gemessen.

Die gemessenen Scherstandzeiten sind in Minuten angegeben und entsprechen dem Mittelwert aus drei Messungen.

### 180°-Klebkrafttest

Ein 20 mm breiter Streifen eines Klebebandes, das aus einer auf einen Polyester gecoateten Haftklebemasse bestand, wurde auf Stahlplatten aufgebracht. Das Klebeband wurde zweimal mit einem 2-kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen.

Für die Messung des Aufziehverhaltens wurde das Klebeband für 72 h auf dem Substrat verklebt und dann sofort mit 300 mm/min und im 180°-Winkel vom Substrat abgezogen. Die Meßergebnisse sind in N/cm angegeben und sind gemittelt aus drei Messungen. Alle Messungen wurden bei Raumtemperatur unter klimatisierten Bedingungen durchgeführt.

### Herstellung des Polymers (a)

Ziel dieser Erfindung ist die Herstellung von Acrylathotmelts mit geringem oder gar keinem Aufziehverhalten. Um den Effekt der PMMA-Kugeln nachzuweisen, mußten zunächst die reinen Polyacrylate ohne Zusatz hergestellt werden. Zu diesem Zweck wurden verschiedene Polyacrylate mit haftklebenden Eigenschaften konventionell im 2-L-Glasreaktor oder im 200 L Stahlreaktor polymerisiert. Die Zusammensetzung der entsprechenden Polymere (a) ist in Tabelle 1 angegeben:

**Tabelle 1**

| Beispiel | AS [%] | 2-EHA[%] | n-BuA [%] | MA [%] | MSA [%] |
|---|---|---|---|---|---|
| 1 | 2 | 48,5 | 48,5 | 0 | 1 |
| 2 | 7 | 78 | 0 | 15 | 0 |
| 3 | 10 | 90 | 0 | 0 | 0 |
| 4 | 2 | 87 | 0 | 10 | 1 |
| AS: Acrylsäure | | | | | |
| 2-EHA: 2-Ethylhexylacrylat | | | | | |
| n-BuA: n-Butylacrylat | | | | | |
| MA: Methylacrylat | | | | | |
| MSA: Maleinsäureanhydrid | | | | | |

Die Beispiele 1 und 4 enthalten geringe Anteile polarer Comonomere, wie Acrylsäure, und sind daher relativ weich. Dagegen sind die Beispiele 2 und 3 relativ polar und werden bevorzugt als scherfestere Produkte ohne hohe Klebkraft sowie ohne Harzabmischung eingesetzt.

Beispiel 1 wurde anschließend optional mit 0,5 Gewichtsanteilen SR 610 (Vernetzermultifunktionelles Acrylat der Firma Cray Valley) und 20 Gewichtsanteilen Norsolen M1080 (Kohlenwasserstoffharz der Firma Cray Valley) abgemischt (Tabelle 2).

**Tabelle 2**

| | | Gewichtsanteile | |
|---|---|---|---|
| Beispiel | Beispiel | SR610 | Norsolen M1080* |
| 1 Harz | 1 | 0.5 | 20 |

| | | | |
|---|---|---|---|
| * KW-Harz der Firma Cray Valley | | | |

Zur Überprüfung der klebtechnischen Daten der Beispiele 1, 1 Harz, 2, 3 und 4 wurden die Klebemassen auf einem Standard polyester- Träger mit 50 g/m² aufgetragen und zur Kohäsionssteigerung mit Elektronenstrahlen (ES) vemetzt. Zur Beurteilung des Aufziehverhaltens wurde die Klebkraftmessung im 180° herangezogen. Es wurde sowohl auf Stahl (polare Oberfläche) als auch auf PE (unpolare Oberfläche) getestet.

Gemessen wurde die Klebkraft sofort und nach 72 h. Zur Vervollständigung wurde ebenfalls die Kohäsion via der Scherstandmessung ermittelt. Die Ergebnisse der klebtechnischen Ausprüfung werden in Tabelle 3 zusammengefaßt:

**Tabelle 3**

| Beispiel | ESH Dosis | KK-Stahl sofort [N/cm] | KK-Stahl 72 h [N/cm] | KK-PE sofort [N/cm] | KK-PE 72 h [N/cm] | SSZ RT 10 N [min] |
|---|---|---|---|---|---|---|
| 1 | 30 kGy | 4,6 | 6,9 | 1,9 | 2,7 | 7250 |
| 2 | 30 kGy | 3,9 | 7,2 | 0,7 | 2,0 | 10000+ |
| 3 | 20 kGy | 3,8 | 7,0 | 0,9 | 2,1 | 10000+ |
| 4 | 50 kGy | 4,5 | 7,3 | 1,8 | 2,6 | 8245 |
| 1 Harz | 50 kGy | 5,8 | 6,7 | 2,5 | 3,8 | 10000+ |
| ESH: Elektronenstrahlhärtung | | | | | | |
| KK-Stahl: Klebkraft auf Stahl | | | | | | |
| KK-PE: Klebkraft auf Polyethylen | | | | | | |
| SSZ RT: Scherstandzeit bei Raumtemperatur | | | | | | |

Tabelle 3 ist zu entnehmen, daß alle gezeigten Acrylathaftklebemassen ein Aufziehverhalten besitzen. In allen Fällen stieg die Klebkraft auf Stahl im Vergleich sofort nach der Applikation und nach 72 h drastisch an. Der Effekt ist etwas weniger ausgeprägt bei der Harz-abgemischen Variante (Beispiel 1 Harz). Ein ähnliches Bild zeigt sich für die Verklebungen auf dem Substrat PE (Polyethylen). Da die Oberfläche sehr unpolar ist und Polyacrylate relativ polar sind, liegen hier die Klebkräfte auf einem bedeutend niedrigeren Niveau. Dennoch zeigt sich auch hier nach 72 h ein deutliches Aufnießverhalten und ein Ansteigen der Klebkräfte. Dieser Effekt tritt besonders stark bei den sehr harten und scherfesten Polyacrylaten 2 und 3 auf, da diese eine längere Zeit zum Auffließen benötigen. Die höchsten Klebkräfte werden mit der Harz-abgemischten Verbindung 1Harz erzielt. Die ScherFestigkeit ist in allen Fällen relativ hoch (bei Raumtemperatur), wobei nur die Polyacrylate 1 und 4 nicht die Grenze von 10.000 Minuten mit 1 kg Scherkraft erreichen.

### Herstellung der erfindungsdemäßen Haftklebemassen

Die Auswirkungen der Zumischung der PMMA-Kugeln, wodurch die erfindungsgemäßen Haftklebemassen erhalten wurden, werden nun im folgenden dargestellt. Zunächst wurden verschiedene Gemische mit unterschiedlichen Gewichtsanteilen an PMMA-Kugeln hergestellt. Verwendet wurden die PMMA-Kugeln der Fa. Nippon Shokubai EPS-MA 1002, EPS-MA 1004 und EPS-MA 1010. Die hergestellten Abmischungen sind in Tabelle 4 angegeben.

**Tabelle 4**

| Beispiel | Beispiel Basis | Durchmesser in µm PMMA-Kugeln | Gewichtsanteil PMMA-Kugeln |
|---|---|---|---|
| 1II | 1 | 2 | 6% |
| 1IV | 1 | 4 | 6 % |
| 1X | 1 | 10 | 6 % |
| 1%3 | 1 | 4 | 3 % |
| 1%12 | 1 | 4 | 12% |
| 2IV | 2 | 4 | 6 % |
| 3IV | 3 | 4 | 6% |
| 4IV | 4 | 4 | 6 % |
| 1Harz%12 | 1 Harz | 4 | 12 % |

Die in Tabelle 4 angegebenen Beispiele wurden, abgesehen von Beispiel 1II und 1IV, konventionell in Lösung hergestellt. Die Gemische sind alle trübe. Zum Vergleich wurden die Beispiele 1II und 1IV gemäß dem Verfahren nach Anspruch 4 hergestellt. Vor der Polymerisation legte man dazu die Monomere, das Lösemittel und die entsprechenden Mengen PMMA-Kugeln vor, rührt und inhibierte mit Stickstoffgas und starte in Analogie zum Beispiel 1 die Polymerisation. Nach 22 h Reaktionszeit wurde die Polymerisationen abgebrochen und die Polyacrylate im GPC untersucht, wobei das homogen verteilte PMMA vorher abfiltriert wurde. Die GPC-Messungen zeigten keine Unterschiede im mittleren Molekulargewicht sowie in der Polydispersität des Materials im Vergleich zu der Polymerisation ohne PMMA. Somit beeinflussen die PMMA-Kugeln nicht die Polymerisation (z. B. als Regler) und brauchen daher später nicht aufwendig zudosiert zu werden. Letzteres ist aber auch möglich, und zwar einfach durch Zudosierung als Feststoff mit anschließender Durchmischung im Compounder.

Die in Tabelle 4 aufgelisteten Beispiele sollten zunächst den Einfluß der Größe der PMMA-Kugeln und deren Mengenanteil am Haftklebstoff untersuchen. Mit den restlichen Gemischen sollte gewährleistet werden, daß die Aussagen auch auf unterschiedliche Haftklebemassen zu übertragen sind.

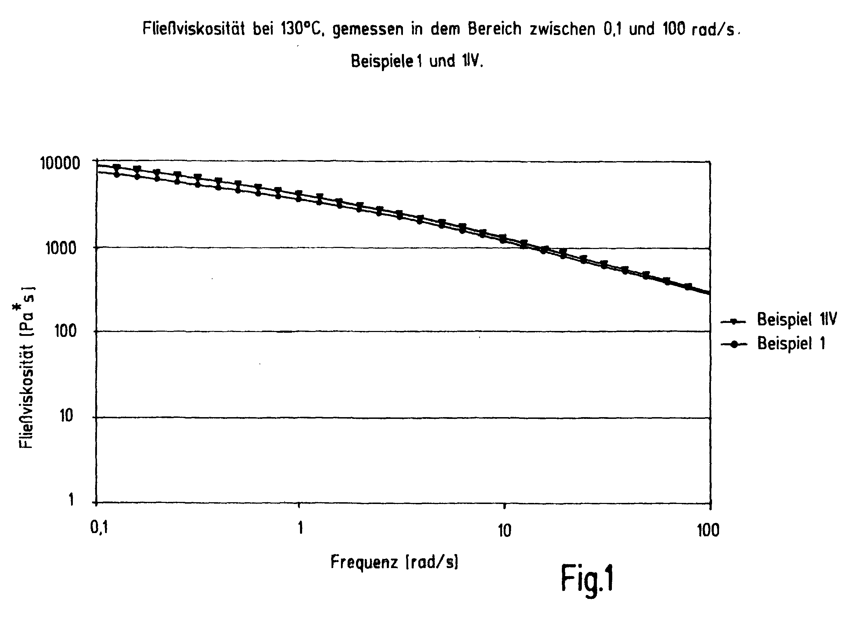

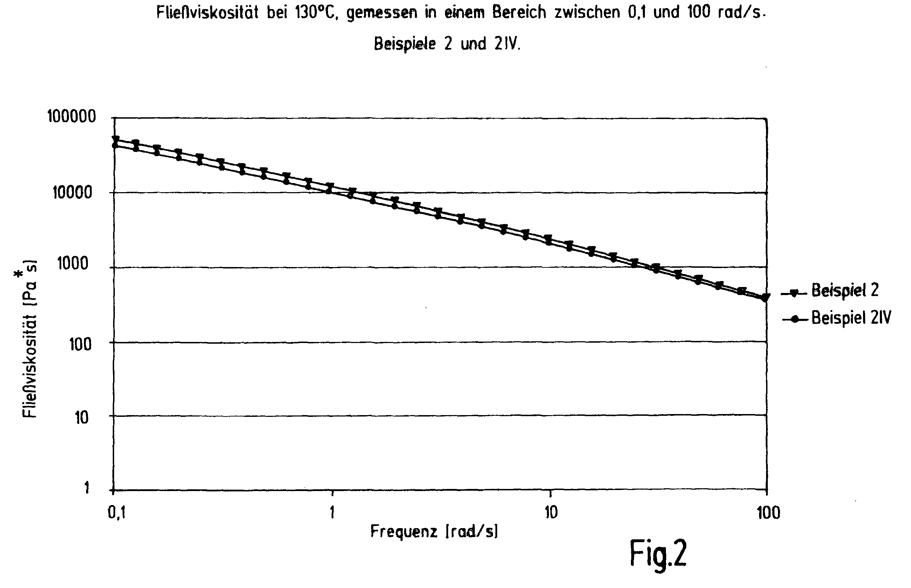

Bevor die erfindungsgemäßen Haftklebemassen, die die PMMA-Kugeln enthielten, klebtechnisch ausgeprüft wurden, führte man einige rheologische Untersuchungen exemplarisch zur Fließviskosität durch. Die Fließviskosität ist ein limitierender Faktor für den Hotmelt-Prozeß und sollte durch die PMMA-Kugeln nicht ansteigen. Die Fließviskosität wurde bei einer typischen Verarbeitungstemperatur von 130 °C ermittelt. In Fig. 1 und 2 sind die Ergebnisse graphisch dargestellt:

Fig. 1 und 2 ist zu entnehmen, daß die Fließviskositäten nicht negativ durch die PMMA-Kugeln beeinflußt werden. Vielmehr liegt die Fließviskosität der mit PMMA-Kugeln vermischen Acrylathaftklebemassen (Polymer (a)) etwas unterhalb der ursprünglichen Fließviskosität. Somit beeinflußt das Zumischen mit PMMA-Kugeln zu Polymer (a) nicht die Hotmelt-Prozeßfähigkeit. Probebeschichtungen durch die Hotmeltdüse zeigten weiterhin, daß sich die PMMA-Kugeln nicht koagulieren und Verklumpungen hervorrufen, die wiederum den Prozeß stören könnten. Somit sind PMMA-Acrylathaftklebeblends vollständig Hotmelt-fähig.

Die klebtechnischen Auswirkungen wurden anschließend in Probebeschichtungen untersucht. Analog zu den Basispolymeren 1, 2, 3, 4, und 1Harz wurde mit 50g/m² beschichtet und auf dem Standard-Polyesterträger mit den identischen ESH-Dosen zwecks Kohäsionssteigerung vernetzt. Die Ergebnisse der klebtechnischen Ausprüfungen sind in Tabelle 5 dargestellt.

**Tabelle 5**

| Beispiel | ESH Dosis | KK-Stahl sofort [N/cm] | KK-Stahl 72 h [N/cm] | KK-PE Sofort [N/cm] | KK-PE 72 h [N/cm] | SSZ RT 10 N [min] |
|---|---|---|---|---|---|---|
| 1II | 30 kGy | 2,4 | 2,6 | 1,0 | 1,1 | 10000+ |
| 1IV | 30 kGy | 2,5 | 2,5 | 1,0 | 1,2 | 10000+ |
| 1X | 30 kGy | 2,5 | 2,7 | 0,9 | 1,0 | 10000+ |
| 1%3 | 30 kGy | 3,0 | 3,0 | 1,0 | 1,2 | 10000+ |
| 1%12 | 30 kGy | 2,1 | 2,1 | 0,5 | 0,5 | 10000+ |
| 2IV | 30 kGy | 2,5 | 2,7 | 0,6 | 0,7 | 10000+ |
| 3IV | 20 kGy | 2,6 | 2,4 | 0,7 | 0,7 | 10000+ |
| 4IV | 50 kGy | 2,9 | 3,0 | 0.8 | 1,0 | 10000+ |
| 1Harz%12 | 50 kGy | 4,7 | 4,9 | 1,9 | 2,0 | 10000+ |

Vergleicht man die Ergebnisse aus Tabelle 3 mit denjenigen aus Tabelle 5, so erkennt man, daß durch den Zusatz an PMMA-Kugeln die Klebkraft, sowohl auf Stahl als auch auf PE, deutlich abgesunken ist. Dafür ist in nahezu allen Fällen das Aufziehverhalten sehr gering oder gar nicht mehr vorhanden. Der Vergleich der Beispiele 1II, 1IV und 1X zeigt, daß die Größe der PMMA-Kugeln bei gleichem Gewichtsanteil keinen großen Einfluß besitzt. Die Klebkraftwerte für Stahl und PE liegen im Rahmen der Meßfehler alle auf dem gleichen Niveau. Dagegen hat der Anteil einen etwas größeren Einfluß. Vergleicht man 1IV mit 1%3 und 1%12, so kann man feststellen, daß mit steigender Menge an PMMA-Kugeln die Klebkraft auf Stahl und PE absinkt. Das Aufziehverhalten ist in allen Fällen gering. Ein ähnliches Bild gibt sich für die Beispiele 2IV, 3IV und 4IV. Auch für die Harz-abgemischte Variante 1Harz%12 wurde eine verringerte Klebkraft auf Stahl und PE gemessen, wenn auch die Werte noch oberhalb der Polyacrylate ohne Harzzusatz liegen. Auch für 1Harz%12 wird ein nur sehr geringes Aufziehverhalten gemessen. Ein Vergleich der Scherstandzeiten liefert eine etwas gesteigerte Kohäsion für die Beispiele 1 und 4. Offensichtlich verteilen die PMMA-Kugeln die inneren Spannungen in der Klebemasse während des Schertestes etwas besser und die Scherstandzeiten steigen an.

Der Zusatz von PMMA-Kugeln zu den Polyacrylaten bewirkt somit eine geringere Klebkraft auf Stahl und Polyethylen. Dennoch wird das sonst bei Polyacrylaten typische Aufziehverhalten deutlich verringert oder sogar eliminiert. Dasselbe Ergebnis wurde für ein Polyacrylat-Harzgemisch gefunden. Neben Harzen können aber auch noch andere Zusätze, die üblich für Haftklebemassen sind, hinzugesetzt werden. Neben Weichmachern, Photoinitiatoren, Füllstoffen sind z. B. auch Alterungsschutzmittel denkbar. Schneidversuche mit hochtackigen Polyacrylathaftklebemassen (hoher Harzanteil, Zusatz von Weichmachern) haben gezeigt, daß mit höherem Anteil PMMA-Kugeln ( größer 6 %) sich die Klebemassen bedeutend besser schneiden lassen. Diese Klebemassen ziehen nicht so schnell am Messer auf, so daß sich das Schneidverhalten - besonders bei Messerstillstand mit anschließendem Anfahren - bedeutend verbessert. Dies ist ein weiterer Vorteil der erfindungsgemäßen Haftklebemasse.

## Patentansprüche

1. Haftklebemasse, umfassend, bezogen auf die Haftklebemasse,
(a) 85 bis 98 Gew.-% eines Polymers aus einer Comonomerzusammensetzung, umfassend, bezogen auf die Comonomerzusammensetzung,
(a1)70 bis 99 Gew.-% Acrylsäure- und/oder Methacrylsäure-Derivate der Formel CH₂=CH(R₁)(COOR₂), wobei R₁ H oder CH₃ darstellt und R₂ eine Alkylkette mit 2 bis 20 Kohlenstoffatomen darstellt; und
(a2) 1 bis 30 Gew.-% funktionalisierte Vinylverbindungen; sowie
(b) 2 bis 15 Gew.-% PMMA-Kugeln mit einer Größe von 2 bis 10 µm.

2. Haftklebemasse nach Anspruch 1, **dadurch gekennzeichnet, daß** die funktionalisierte Vinylverbindung aus der Gruppe ausgewählt wird, die Maleinsäureanhydrid, Styrol, Styrol-Derivate, Vinylacetat, Acrylamide und mit Doppelbindungen funktionalisierte Photoinitiatoren umfaßt.

3. Haftklebemasse nach Anspruch 1 oder Anspruch 2, **dadurch gekennzeichnet, daß** sie ferner Harze umfaßt, die aus der Gruppe ausgewählt sind, die Terpen-, Terpenphenolharze, C₅- und C₉-Kohlenwasserstoffharze, Pinen-, Inden- und Kolophoniumharze oder Gemische von diesen umfaßt.

4. Verfahren zur Herstellung einer Haftklebemasse nach einem der Ansprüche 1 bis 3, umfassend die Schritte
(a) Herstellen eines Gemisches, umfassend die Komponenten der Comonomerzusammensetzung und die PMMA-Kugeln; und
(b) Polymerisieren der Comonomerzusammensetzung.

5. Verfahren zur Herstellung einer Haftklebemasse nach einem der Ansprüche 1 bis 3, umfassend die Schritte
(a) Herstellen eines Gemisches, umfassend die Komponenten der Comonomerzusammensetzung;
(b) Polymerisieren der Comonomerzusammensetzung unter Erhalt des Polymers; und
(c) Zugabe der PMMA-Kugeln zu dem Polymer und Vermischen des Polymers mit den PMMA-Kugeln.

6. Verfahren nach Anspruch 4 oder Anspruch 5, **dadurch gekennzeichnet, daß** das Gemisch in Schritt (a) in Lösung hergestellt wird.

7. Verfahren nach Anspruch 4 oder Anspruch 5, **dadurch gekennzeichnet, daß** das Polymer als Hotmelt hergestellt wird.

8. Verwendung einer Haftklebemasse nach einem der Ansprüche 1 bis 3 für ein Klebeband.

9. Verwendung nach Anspruch 8, wobei die Haftklebemasse als Schicht auf eine oder beide Seiten eines Trägers beschichtet ist.
